# EUROPEAN PATENT APPLICATION

(11) **EP 4 177 819 A1**
(43) Date of publication of application: **10.05.2023**
(21) Application number: 20942970.3
(22) Date of filing: 03.09.2020
(51) Int. Cl.: G06Q 50/22, G06Q 30/06, G06Q 50/30, G06Q 30/08, G06Q 50/10, G06Q 20/14, G06Q 50/28

(54) **ONLINE PET JOINT CUSTODY METHOD, SERVER, AND SYSTEM**

(30) Priority: 01.07.2020 KR 20200081043
(71) Applicant: Jin, Jeong Sik, Jeonju-si, Jeollabuk-do 54823 (KR)
(72) Inventor: Jin, Jeong Sik, Jeonju-si, Jeollabuk-do 54823 (KR)
(74) Representative: Frenkel, Matthias Alexander
(86) International application number: PCT/KR2020/011830
(87) International publication number: WO 2022/004943

(57) **Abstract**

The present invention relates to an online pet joint custody method, server, and system. The online pet joint custody method according to the present invention comprises: a first step in which an offline guardian terminal applies a registration of a shared pet by transmitting information of a pet being raised, and a raising condition; a second step in which a shared pet server receives the registration application of the shared pet, and registers the pet as a shared pet; a third step in which an online guardian terminal accesses the shared pet server to identify the information of the pet registered as the shared pet and apply joint custody of the shared pet; and a fourth step in which, when the shared pet server provides the application of joint custody to the offline guardian terminal, and receives an approval on the joint custody from the offline guardian terminal, the shared pet server registers a user of the online guardian terminal as a joint custodian.

## Description

### [Technical Field]

The present invention relates to an online pet co-parenting method, server and system, and more particularly, to an online pet co-parenting method, server and system in which a guardian who directly raises a pet and an online guardian can co-parent a pet.

### [Background Art]

In modern society, a new lifestyle is being formed in which the human lifespan is increasing with the development of medicine and culture, and a nuclear family-centered life is generalized. Further, the number of single and elderly households living alone is increasing due to younger generation's pre-marital independence or due to divorce or bereavement. Recently, interest in pets has been growing thanks to this social phenomenon.

Pets generally refer to animals that humans raise mainly for enjoyment, but recently, pets have become more than a possession, they are beings that bring happiness and joy. The pet market is proliferating with the recognition that pets are members of the family and even companions in life. However, raising a pet in an urban living environment burdens on the caregiver in terms of environment, time, and cost; it takes work to raise a pet. There are also social problems such as frequent abandonment adopted pets due to disregarding the hardships mentioned above without considering these problems.

As a modern alternative to this problem, a computer, smart phone, game device, etc., is used to provide an environment for raising animals or growing plants more easily in a virtual reality. A user is allowed to raise pets or livestock in a virtual space to make attempts to provide an environment similar to the experience of raising a real pet.

However, since raising such a virtual animal or plant is provided through an artificial environment, there is a downside;although the emotional part of raising a virtual pet is emphasized, the user cannot satisfy the emotion felt by raising a pet or raising livestock that has a beating heart.

### [Disclosure]

### [Technical Problem]

The present invention has been devised to address the above issues, and the present invention provides a method in which offline guardians who directly raise pets at home and online guardians who indirectly raise pets online may co-parent pets.

### [Technical Solution]

An online pet co-parenting method according to an embodiment of the present invention for addressing the issues mentioned above comprises a first step of transmitting, by an offline guardian terminal, information of a pet being raised, and a raising condition to apply a registration of a shared pet; a second step of receiving, by a shared pet server, the registration application of the shared pet to register the pet as the shared pet; a third step of accessing, by an online guardian terminal, the shared pet server to identify the information on the pet registered as the shared pet and apply co-parenting of the shared pet; and a fourth step of providing, by the shared pet server, the application of co-parenting to the offline, and when receiving an approval on the co-parentingfrom the offline guardian terminal, a user of the online guardian terminal is registered as a co-parent.

According to another embodiment of the present invention, the method may further comprise: after the fourth step, accumulating, by the online guardian terminal, a donation for the shared pet on the shared pet server; or providing, by the shared pet server, a chat room between the offline guardian terminal and the online guardian terminal.

According to another embodiment of the present invention, the method may further comprise: after the fourth step, providing, by the shared pet server, a breeding service between the shared pet of the offline guardian and the shared pet of another offline guardian.

According to another embodiment of the present invention, the step of providing a breeding service may comprise: registering, by the offline guardian terminal, information on breeding wishes for the shared pet on the shared pet server; accessing, another offline guardian terminal, the shared pet server to confirm the desired breeding information and transmit a breeding request for the shared pet; andreceiving, by the offline guardian terminal, the breeding request and executing a response to the breeding request.

According to another embodiment of the present invention, the step of executing the response to the breeding request may comprise: receiving, by the offline guardian terminal, the breeding vote for the shared pet from the shared pet server to reflect the breeding vote and execute a response to the breeding request.

According to another embodiment of the present invention, the method may comprise, after the step of executing the response to the breeding request,providing, by the offline guardian terminal or another offline guardian terminal, pregnancy information on the shared pet; and providing, by the offline guardian terminal or another offline guardian terminal, birth information on the shared pet.

According to another embodiment of the present invention, the method may comprise, after the step of providing the birth information on the shared pet,registering, by the offline guardian terminal or another offline guardian terminal, the sale information on the shared baby pet that the shared pet gave birth to the shared pet server;applying, by the offline guardian terminal or another offline guardian terminal, for the sale of the shared baby pet as the first priority and applying, by the online guardian terminal or another online guardian terminal, for the sale of the shared baby pet as the second priority; andrequesting, by the shared pet, delivery of the shared baby pet to a delivery company server when the shared pet server receives the sale amount according to the sale application of the shared pet. The online pet co-parenting server according to an embodiment of the present invention is configured to comprise a shared pet registration unit for receiving information and raising conditions of a pet being raised from an offline guardian terminal and registering the pet as a shared pet;a co-parenting registration unit for providing information on the pet registered as the shared pet to the connected online guardian terminal side, receiving an application for co-parenting for the shared pet, providing the application for co-parenting to the offline guardian terminal, and registering the user of the online guardian terminal as a co-parent when receiving the approval for the co-parenting from the offline guardian terminal;a payment processing unit for collecting donations for the shared pet from the online guardian terminal;a chat room providing unit for providing a chat room between the offline guardian terminal and the online guardian terminal;a breeding service providing unit for providing a breeding service between the shared pet of the offline guardian terminal and the shared pet of another offline guardian terminal; anda sale processing unit for requesting delivery of the shared baby pet to a delivery company server when receiving the sale information of the shared baby pet born by the shared pet from the offline guardian terminal or another offline guardian terminal, and depositing the sale amount through the payment processing unit according to the sale order of the shared baby pet.

### [Advantageous Effects]

According to the present invention, it is possible to provide a method in which offline guardians who directly raise pets at home and online guardians who indirectly raise pets online may co-parent pets.

More specifically, the present invention provides a pet co-parenting method and system foran offline guardian, who is a guardian of a pet raised directly at home, and an online guardian, who is a guardian of a pet raised indirectly online to provide a complementary and enjoyable raising environment for pets while offline and online guardians exchange information and opinions about pets with each other.

Further, according to the present invention, offline guardians raising pets can receive support for raising pets from online guardians, thereby providing a more improved raising environment for pets.

Further, the present invention provides an indirect experience of raising pets through being an online guardian who indirectly raises pets online, thereby providing training for raising pets and eventually adopting pets to allow them to adapt more smoothly to the upbringing of pets.

### [Description of Drawings]

FIG. 1 is a view for explaining an online pet co-parenting system according to an embodiment of the present invention.
FIG. 2 is a conceptual view of an online pet co-parenting server according to an embodiment of the present invention.
FIG. 3 is a flowchart illustrating an online pet co-parenting method according to an embodiment of the present invention.
FIG. 4, FIG. 5, FIG. 6 and FIG. 7 are views for explaining an online pet co-parenting method according to an embodiment of the present invention.
FIG. 8 and FIG. 9 are flowcharts for explaining an online pet co-parenting method according to another embodiment of the present invention.
FIG. 10 and FIG. 11 are views for explaining an online pet co-parenting method according to another embodiment of the present invention.

### [Mode for Invention]

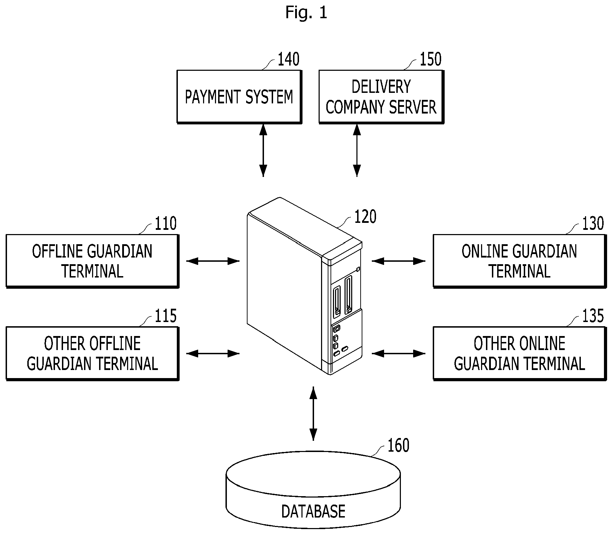

Hereinafter, an exemplary embodiment of the present invention will be described in detail with reference to the accompanying drawings. However, if it is determined that a detailed description of a related known function or configuration may unnecessarily obscure the gist of the present invention in describing the embodiment, the detailed description thereof is excluded. Further, the size of each component in the drawings may be exaggerated for explanation and does not mean the size actually applied. FIG. 1 is a view for explaining an online pet co-parenting system according to an embodiment of the present invention.

Hereinafter, an online pet co-parenting system according to an embodiment of the present invention is described with reference to FIG. 1.

The present invention provides a method in which an offline guardian who directly raises pets at home and an online guardian who indirectly raises a pet online may co-parenta pet.

In this way, in order for an offline guardian who directly raises a pet at home and an online guardian who indirectly raises a pet online to co-parent a pet, the offline guardian who directly raises a pet at home first registers, through the offline guardian terminal 110, the pet registration information consisting of information such as photos and videos containing the daily life of pets they want to co-parent, conditions for becoming an online guardian of jointly to-be-raised pets online, orconditions of how far online guardians of online indirectly raised pets may participate in co-parentingon the online website provided by the shared pet server 120.

As such, the pet registration information consisting of information such as photos and videos containing the daily life of pets they want to co-parent, conditions for becoming an online guardian of jointly to-be-raised pets online, or conditions of how far online guardians of online indirectly raised pets may be stored in the database 160.

Accordingly, a user visits the online website check the daily life of pets through the online website, selects the pet he/her wants to co-parent, and submits an application for co-parenting. When co-parentingis approved by the offline guardian terminal 130 of the offline guardian of the pet, the user becomes the online guardian who is the pet's guardian online.

Therefore, an online guardian of a pet who can indirectly raise online may provide sponsorship for pets through the shared pet server 120 while watching the daily life of the pet applied for co-parenting through the online guardian terminal 130 online. More specifically, the online guardian terminal 130 is used to access the shared pet server 120, presenting necessary pet supplies to pets, helping when pets need care, allowing the pet to participate in pet mating, and accumulating points to purchase items necessary for raising pets or sponsoring donations through the payment system 140.

Further, the online guardian may participate in the sale of the baby pet born by the pet according to the sale order through the online guardian terminal 130, and when the deposit of the sale amount is made through the payment system 140, the shared pet server 120 may request delivery through the delivery company server 150 to deliver the shared baby pet.

As described above, according to the present invention, offline guardians who directly raise a pet at home and online guardians who indirectly raise a pet online exchange information and opinions on pets between offline guardians and online guardians to provide a complementary and enjoyable raising environment for pets through a system for co-parenting pets (shared pets).

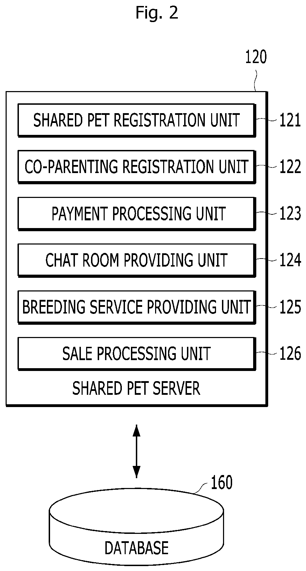

FIG. 2 is a conceptual view of an online pet co-parenting server according to an embodiment of the present invention.

Hereinafter, with reference to FIG. 2, the configuration of the online pet co-parenting server according to an embodiment of the present invention is described.

Referring to FIG. 2, the online pet co-parenting server 120 according to an embodiment of the present invention comprises a shared pet registration unit 121, a co-parenting registration unit 122, a payment processing unit 123, and a chat room providing unit 124, breeding service providing unit 125, and a sale processing unit 126.

The shared pet registration unit 121 may receive information and raising conditions of the pet being raised from the offline guardian terminal 110 to register the pet as a shared pet.

The co-parenting registration unit 122 provides information on the pet registered as the shared pet to the connected online guardian terminal 110.

Further, the co-parenting registration unit 122 may receive an application for co-parenting for the shared pet and may provide the application for co-parenting to the offline guardian terminal 110. Upon receiving approval for the co-parenting from the offline guardian terminal 110, the user of the online guardian terminal 130 may be registered as a co-parent.

The payment processing unit 123 may process the accumulation of donations for the shared pet from the online guardian terminal 130.

The chat room providing unit 124 may provide a chat room between the offline guardian terminal and the online guardian terminal.

The breeding service providing unit 125 may provide a breeding service between the shared pet of the offline guardian terminal and the shared pet of another offline guardian terminal 110.

The sale processing unit 126 may receive the pre-sale information of the shared baby pet born by the shared pet from the offline guardian terminal 110 or another offline guardian terminal 115 and register it with the shared pet server 120.

Further, when the sale is made according to the order of sale for the registered shared pet, the sale amount is processed through the payment system 140 and deposited through the payment processing unit 123, the sale processing unit 126 may request delivery of the shared baby pet to the delivery company server 150. The database 160 may store the pet registration information consisting of information such as photos and videos containing the daily life of pets they want to co-parent, conditions for becoming an online guardian of jointly to-be-raised pets online, or conditions of how far online guardians of online indirectly raised pets. Further, the database 160 may store member registration information for the use of the shared pet service, information of the offline guardian terminal 110 raising pets, the offline guardian's information, information of the online guardian terminal 130 registered as a co-parent, and the online guardian's information.

In addition, the database 160 may store breedingwish information and breeding application information for providing a breeding service and may store information on pre-sale of a shared baby pet born by the shared pet.

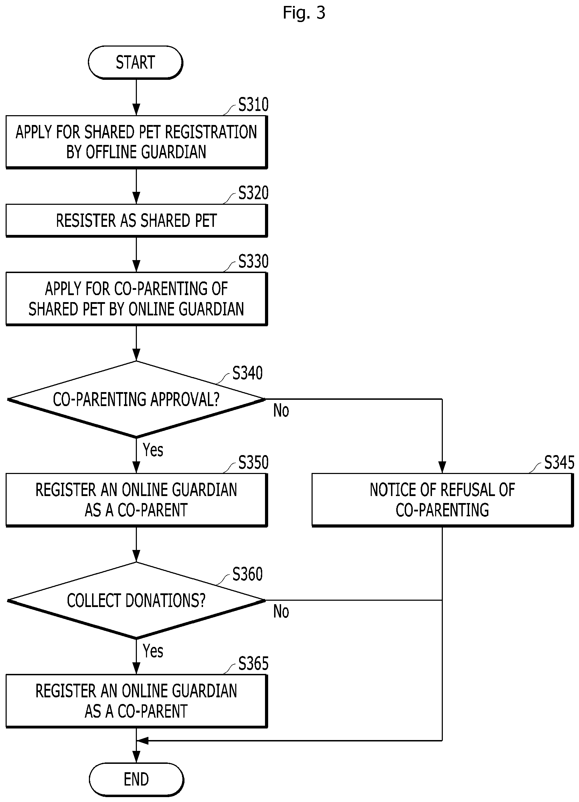

FIG. 3 is a flowchart illustrating an online pet co-parenting method according to an embodiment of the present invention. In more detail, it is a view for explaining a method of approving co-parenting and accumulating donation money according to an embodiment of the present invention.

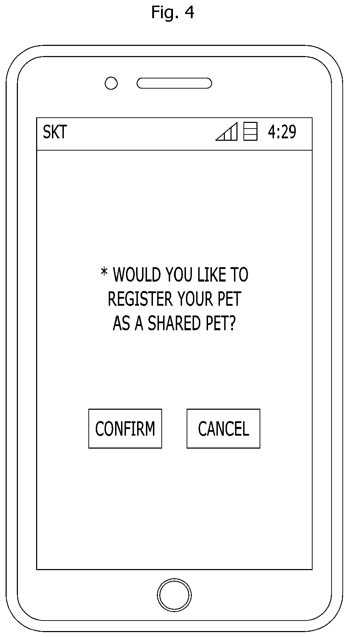

Further, FIG. 4, FIG. 5, FIG. 6, and FIG. 7 are views for explaining an online pet co-parenting method according to an embodiment of the present invention.

Referring to FIG. 3, in the online pet co-parenting method according to an embodiment of the present invention, the offline guardian terminal first transmits information and raising conditions of the pet being raised to apply registration of the shared pet as shown in FIG. 4 (S310).

Accordingly, the shared pet server receives the registration application of the shared pet and registers the pet as the shared pet (S320).

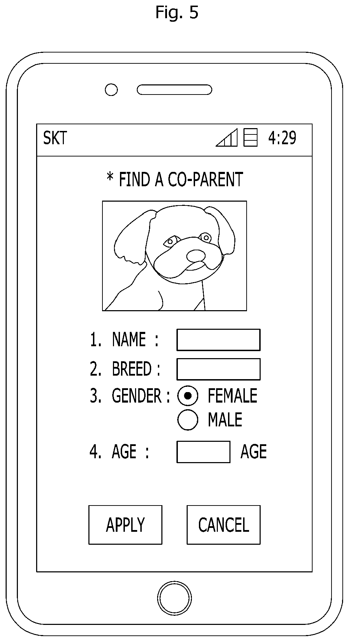

Such application and registration of the shared pet can be performed by logging in after the offline guardian accesses the website provided by the shared pet server, enters member information, and sets up a password to sign up for membership. Thereafter, as shown in FIG. 5, the online guardian terminal accesses the shared pet server, checks the information on the pet registered as the shared pet, and applies for the co-parenting of the shared pet (S330).

Such application and registration of shared pet and application of co-parenting may be made by logging in after the offline guardian and the online guardian access the website provided by the shared pet server, enter member information, and set a password to sign up for membership.

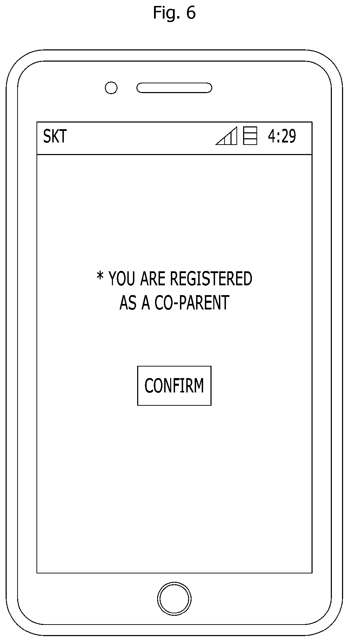

After that, when the shared pet server provides the application for co-parenting to the offline guardian terminal. As shown in FIG. 6, upon receiving approval for the co-parenting from the offline guardian terminal (S340), the user of the online guardian terminal is registered as a co-parent (S350). At this time, when the shared pet server receives the rejection of the co-parenting from the offline guardian terminal, it may notify the offline guardian terminal that the co-parentingis rejected (S345).

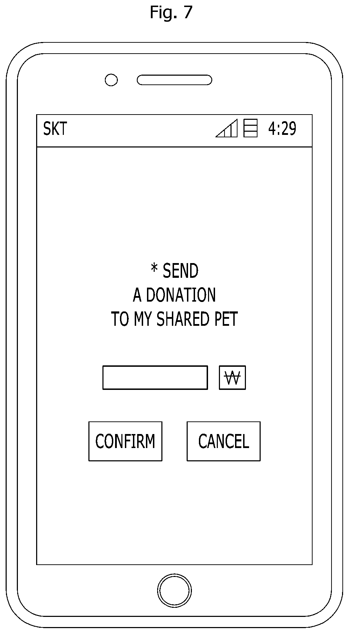

Further, as shown in FIG. 7, when the online guardian terminal accumulates a donation for the shared pet on the shared pet server (S360), the shared pet server may process the accumulation of the donation (S365).

Hereinafter, a more specific embodiment of the online pet co-parenting method of the present invention is described.

First, offline guardians of shared pets who want to co-parenting may enter the shared pet's registration information including information on the daily life of the shared pet, containing photos and videos of the shared pet's daily life (shared pet daily information), conditions for online guardians to share co-parenting required by offline guardians of shared pets (condition of online guardianship) and conditions for the extent to which online guardians required by offline guardians of shared pets can participate in co-parenting of shared pets (condition of participation in co-parenting) into the shared pet web provided by the shared pet server.

Such online guardian conditions may be set by simultaneously designating one or more conditions such as friends, school classmates, club members, company colleagues, men or women, the same region, the same country, and the like. Further, the conditions for participating in co-parenting that can be designated by the offline guardian may be registered by simultaneously setting one or more conditions such as conditions that can only be observed through the shared pet web, conditions for gifting pets, conditions that can help them when care is required, conditions under which male pets can be selected to mate, conditions to participate in the sale of newborn baby pets, and conditions for shared pet web coins or sponsoring donations for purchasing pet products.

Accordingly, users who use the shared pet web (shared pet web users) search for the shared pet registration information, fill out an application (co-parenting application) to apply for co-parenting of the selected shared pet, input them on the shared pet web, and wait for a response to an application for co-parenting.

The offline guardian who receives the co-parenting application from the shared pet web user decides whether to approve the co-parenting and enters it into the shared pet web. In this way, if the information that approves co-parenting from the offline guardian is input to the shared pet web, the shared pet web approves the application for theco-parenting of the shared pet to the applicant (co-parenting applicant) who applied for the co-parenting of the shared pet. Therefore, it is informed that it has become an online guardian who co-parents the selected shared pet together with the offline guardian.

In this way, when approval is made as an online guardian of the shared pet, the online guardian may sponsor things necessary to co-parent the shared pet, for example, the online guardian may gift the shared pet with necessary pet supplies, help when the shared pet needs care, or sponsor shared pet web points (shared pet web coins) or donations that can be used to purchase items necessary for raising the shared pet.

In this process, the shared pet server provides a chat room (shared pet chat room) through the shared pet web so that the information necessary for the co-parenting of the shared pet may be exchanged between the online guardian and the offline guardian (on and offline guardians), thereby supporting co-parenting.

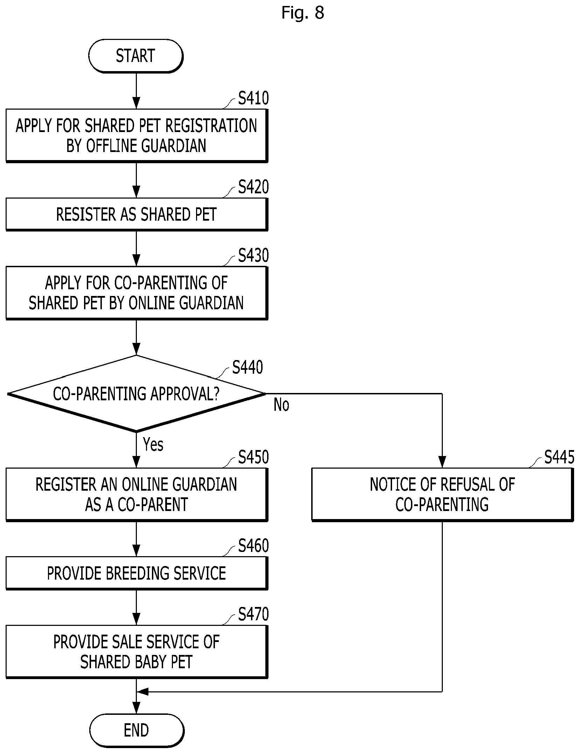

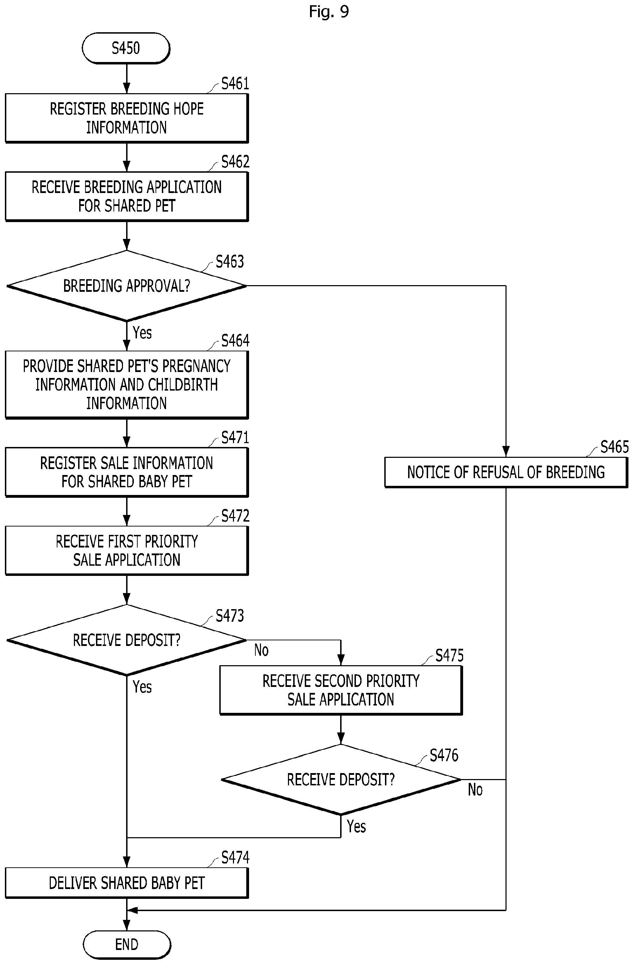

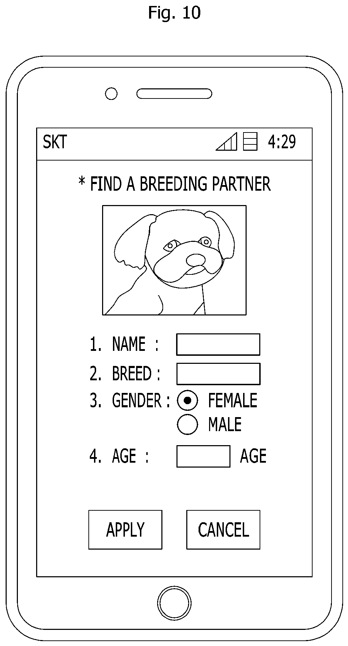

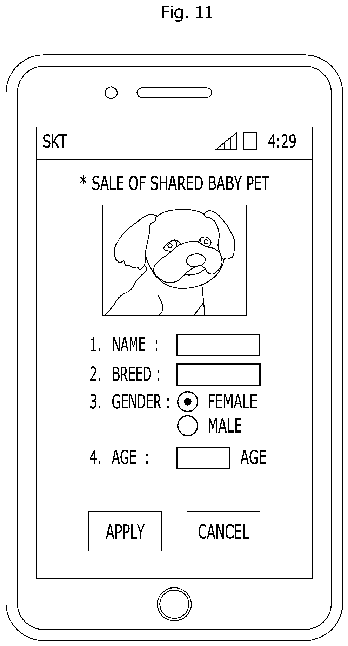

FIG. 8 and FIG. 9 are flowcharts for explaining an online pet co-parenting method according to another embodiment of the present invention. In more detail, FIG. 8 is a flowchart for explaining the method of a shared pet breeding and a shared baby pet selling according to an embodiment of the present invention, and FIG. 9 is a flowchart for more specifically explaining the method of a shared pet breeding and a shared baby pet selling according to an embodiment of the present invention, Further, FIG. 10 and FIG. 11 are views for explaining an online pet co-parenting method according to another embodiment of the present invention.

Referring to FIG. 8, in the online pet co-parenting method according to an embodiment of the present invention, the offline guardian terminal first transmits information and raising conditions of the pet being raised to apply for registration of the shared pet (S410), The shared pet server receives the registration application of the shared pet and registers the pet as a shared pet (S420).

Thereafter, the online guardian terminal accesses the shared pet server, checks the information of the pet registered as the shared pet, and applies for co-parenting of the shared pet (S430).

When the shared pet server provides the application for co-parenting to the offline guardian terminal and receives approval for the co-parenting from the offline guardian terminal (S440), the user of the online guardian terminal is registered as a co-parent (S450). At this time, when the shared pet server receives a rejection of the co-parenting from the offline guardian terminal, it notifies the offline guardian terminal that the co-parentingis rejected (S445).

Thereafter, the shared pet server may provide a breeding service between the shared pet of the offline guardian and the shared pet of another offline guardian (S460).

In addition, the shared pet server may provide a sale service of a shared baby pet born through breeding (S470).

Hereinafter, the breeding service providing method the and the sale service providing method are described in more detail with reference to FIG. 9, FIG. 10 and FIG. 11. Referring to FIG. 9, the offline guardian terminal registers the desired breeding information for the shared pet on the shared pet server as shown in FIG. 10 (S461). Accordingly, another offline guardian terminal accesses the shared pet server, confirms the desired breedinginformation, and transmits a breedingapplication for the shared pet (S462).

Therefore, the offline guardian terminal receives the breeding application and executes a response to the breeding request.At this time, the breedingis approved (S463), and then, when the shared pet becomes pregnant and gives birth through breeding, the offline guardian terminal or another offline guardian terminal may provide pregnancy information and childbirth information of the shared pet to the shared pet server (S464). Further, if the breedingis not approved at this time, the offline guardian terminal may notify the other offline guardian terminal through the shared pet server to reject the pairing (S465). Further, the offline guardian terminal may notify another offline guardian terminal to reject the breeding through the shared pet server (S465).

After providing such birth information, as shown in FIG. 11, the offline guardian terminal or another offline guardian terminal may register the sale information of the shared pet baby born by the shared pet to the shared pet server (S471).

The offline guardian terminal or another offline guardian terminal applies for the sale of the shared baby pet as the first priority (S472). When the shared pet server receives the sale amount according to the sale application for the shared pet (S473), the shared baby pet may bedelivered by requesting the delivery of the shared baby pet to the delivery company server (S474).

At this time, if the deposit of the sale amount in the first priority step is not processed, the online guardian terminal or another online guardian terminal applies for the sale of the shared baby pet as the second priority (S475). Upon receiving the sale amount according to the sale application of the shared pet (S476), the shared baby pet may be delivered by requesting the delivery of the shared baby pet to the delivery company server (S474).

Hereinafter, more specific embodiments of the method of breeding and sale method of a shared pet of the present invention are described.

When the offline guardian of the shared pet wants breeding of the shared pet, the offline guardian registers the announcement for recruiting the shared pet for breeding (announcement of breeding partner recruitment) on the shared pet web provided by the shared pet server.

Other offline guardians, who are guardians of shared pets who want to participate in the announcement of breeding partner recruitment of shared pets, apply to participate in the announcement of breeding partner recruitment (application for breeding partner participation) before the set date of selection of the shared pet to mate (mating partner's selection date) and waits for a result.

Then, the online guardians of the shared pet fill out the information (breeding partner selection information) for selecting the desired shared pet as a breeding partner from the breeding partner participation application for the shared pet received before the breeding partner selection date and enter it on the shared pet web.

After that, the shared pet server notifies all the online and offline guardians of the result of the breeding partner selection information chosen the most by the online guardians of the shared pet, and as a result, it requests breeding to the offline guardians of the selected male shared pet and the female shared pet and then offline guardians of male shared pets and female shared pets perform breeding of their pets.

Afterwards, if the matched female shared pet is pregnant, the offline guardian of the pregnant female shared pet (shared mother pet) sends the shared mother pet's pregnancy information (pregnancy information of shared mother pet) to all on-offline guardians.

Further, when the shared mother pet gives birth to a baby pet (shared baby pet), the birth information of the shared mother pet (shared mother pet's birth information) who gave birth to the shared baby pet is sent to all on-offline guardians. Therefore, all shared pet on-offline guardians, including on-offline guardians of male shared pet (shared father pet) matched with shared mother pet who gave birth to shared baby pet, and on-offline guardians of shared mother pet check the mother pet pregnancy information and the birth information of shared baby pet (shared baby pet's birth information) and select a favorite shared baby pet to participate in the shared baby petsale.

In this case, the qualification to participate in the sale of the shared baby pet as the first priority may be the on-offline guardians of the shared mother pet and the shared father pet (the shared parent pet), which are the parents of the shared baby pet.

When the on-offline guardians of the parent shared pet, which is the first priority for shared baby petsale (the first in line to sale), submit the first priority sale application (application for the first priority sale) on the shared pet web before the set first priority sale date, the shared pet web requests the applicant who has submitted the first priority sale application on the shared pet web to deposit the first priority sale amount of the shared baby pet by a set time.

When all of the first priority sale amount are deposited, the shared pet web notifies all the on-offline guardians of shared pets that the shared baby petsale has been completed.

However, if all of the shared baby pets are not sold in the first priority, the additional unsold shared baby pets will be sold in the second priority sale.

Here, when all on-offline guardians of shared pets using the shared pet web who are eligible to participate in the sale of shared baby pets as the second priority (the second in line to sale) submit the second priority sale application (application for the second priority sale) on the shared pet web before the set second priority sale date, the shared pet web requests the applicant who has submitted the second priority sale application on the shared pet web to deposit the second priority sale amount of the shared baby pet by a set time.

When all of the second priority sale amount are deposited, the shared pet web notifies all the on-offline guardians of shared pets that the shared baby petsale has been completed.

Then, when the offline guardian of the shared mother pet checks the shared baby pet's sale information (sale information of shared baby pet), it is requested to enter information to confirm whether the to-be-delivered shared baby pet is ready to be delivered to the shared baby pet adopters on the set delivery date (information about preparing for delivery of shared baby pets) on the shared pet web.

When the offline guardian of the shared mother pet enters information on preparing the shared pet for delivery into the shared pet web, the shared pet server may safely deliver the shared baby pet to the shared baby pet adopter on the set sale date through the shared pet delivery company.

At this time, the shared pet server requests the shared pet delivery company to enter the information on the delivery of the shared baby pet in the form of photos or videos (information on the delivery of the shared baby pet) into the shared pet web. Accordingly, when the shared pet delivery company inputs the shared baby pet delivery completion information into the shared pet web, the shared pet server notifies all the on-offline guardians of shared pets that the shared baby pet has been safely distributed.

Further, the shared baby pet adopter who received the shared baby pet becomes the offline guardian of the shared baby pet, and the on-offline guardian of the parent shared pet who has sold the shared baby pet automatically becomes the online guardian of the shared baby pet.

Therefore, the shared baby pet adopter may input the shared pet registration information of the shared baby pet, such as a photo or video containing the life of the shared baby pet, into the shared pet web for on-offline guardians of the parent shared pet.

At this time, if the adopter does not want to recruit additional online guardians to co-parent the shared baby pet online, the adopter only needs to input the shared pet daily information and not needs to input the conditions for online guardianship or co-parenting participation.

However, if the adopter wants to recruit additional online guardians to co-parent the shared baby pet, the adopter inputs the shared pet daily information of the shared baby pet, condition for online guardian, and the condition for co-parentingparticipation on the shared pet web.

Accordingly, the shared pet web user can become an online co-parent of the shared pet by searching and then selecting the shared pet registration information.

As such, the online guardian of the shared baby pet corresponds to the on-offline guardian of the parent shared pet and the on-offline guardian of the additionally recruited shared baby pet.

That is, the online guardians who applied to co-parent the shared pet becomes an online guardian of thedescendant shared pets,such as the first generation corresponding to the shared pet's son and daughter, as well as the second generation corresponding to the shared pet's grandson and granddaughter or the third generation, etc., thereby co-parenting and supportingthe shared pet's family. Specific embodiments have been described in the detailed description of the present invention as described above. However, various modifications are possible without departing from the scope of the present invention. The technical spirit of the present invention should not be limited to the above-described embodiments of the present invention but should be defined by the claims as well as equivalents thereof.

## Claims

1. An online pet co-parenting method comprising:
a first step of transmitting, by an offline guardian terminal, information of a pet being raised, and a raising condition to apply a registration of a shared pet;
a second step of receiving, by a shared pet server, the registration application of the shared pet to register the pet as the shared pet;
a third step of accessing, by an online guardian terminal, the shared pet server to identify the information on the pet registered as the shared pet and apply co-parentingof the shared pet; and
a fourth step of providing, by the shared pet server, the application of co-parentingto the offline, and when receiving an approval on the co-parenting from the offline guardian terminal, a user of the online guardian terminal is registered as a co-parent.

2. The online pet co-parenting method of claim 1, further comprising: after the fourth step,
accumulating, by the online guardian terminal, a donation for the shared pet on the shared pet server; or
providing, by the shared pet server, a chat room between the offline guardian terminal and the online guardian terminal.

3. The online pet co-parenting method of claim 1, further comprising: after the fourth step,
providing, by the shared pet server, a breeding service between the shared pet of the offline guardian and the shared pet of another offline guardian.

4. The online pet co-parenting method of claim 3, wherein the step of providing a breeding service comprises:
registering, by the offline guardian terminal, information on breeding wishes for the shared pet on the shared pet server;
accessing, another offline guardian terminal, the shared pet server to confirm the desired breeding information and transmit a breeding request for the shared pet; and
receiving, by the offline guardian terminal, the breeding request and executing a response to the breeding request.

5. The online pet co-parenting method of claim 4, wherein the step of executing the response to the breeding request comprises:
receiving, by the offline guardian terminal, the breeding vote for the shared pet from the shared pet server to reflect the breeding vote and execute a response to the breedingrequest.

6. The online pet co-parenting method of claim 5, comprising, after the step of executing the response to the breeding request,
providing, by the offline guardian terminal or another offline guardian terminal, pregnancy information on the shared pet; and
providing, by the offline guardian terminal or another offline guardian terminal, birth information on the shared pet.

7. The online pet co-parenting method of claim 6, comprising, after the step of providing the birth information on the shared pet,
registering, by the offline guardian terminal or another offline guardian terminal, the sale information on the shared baby pet that the shared pet gave birth to the shared pet server;
applying, by the offline guardian terminal or another offline guardian terminal, for the sale of the shared baby pet as the first priority and applying, by the online guardian terminal or another online guardian terminal, for the sale of the shared baby pet as the second priority; and
requesting, by the shared pet, delivery of the shared baby pet to a delivery company server when the shared pet server receives the sale amount according to the sale application of the shared pet.

8. An online pet co-parenting server comprising:
a shared pet registration unit for receiving information and raising conditions of a pet being raised from an offline guardian terminal and registering the pet as a shared pet;
a co-parenting registration unit for providing information on the pet registered as the shared pet to the connected online guardian terminal side, receiving an application for co-parenting for the shared pet, providing the application for co-parenting to the offline guardian terminal, and registering the user of the online guardian terminal as a co-parent when receiving the approval for the co-parenting from the offline guardian terminal;
a payment processing unit for collecting donations for the shared pet from the online guardian terminal;
a chat room providing unit for providing a chat room between the offline guardian terminal and the online guardian terminal;
a breeding service providing unit for providing a breeding service between the shared pet of the offline guardian terminal and the shared pet of another offline guardian terminal; and
a sale processing unit for requesting delivery of the shared baby pet to a delivery company server when receiving the sale information of the shared baby pet born by the shared pet from the offline guardian terminal or another offline guardian terminal and depositing the sale amount through the payment processing unit according to the sale order of the shared baby pet.
